# EUROPEAN PATENT APPLICATION

(11) **EP 0 569 717 A1**
(43) Date of publication of application: **18.11.1993**
(21) Application number: 93105975.2
(22) Date of filing: 13.04.1993
(51) Int. Cl.: H02K 7/075

(54) **Magnet engine**

(30) Priority: 12.05.1992 JP 145066/92
(71) Applicant: COSMOSS ENERGY JAPAN COMPANY LIMITED, Sapporo, Hokkaido (JP)
(72) Inventor: Mikami, Kazunori, Sapporo, Hokkaido (JP); Horie, Yae, Sapporo, Hokkaido (JP)
(74) Representative: Leyh, Hans, Dr.-Ing.

(57) **Abstract**

A novel magnet engine of a simple construction which provides clean power making use of an attractive force and a repulsive force acting alternately between two magnetic poles without dissipating limited fossil fuel. A permanent magnet (4) and an electromagnet (5) are disposed respectively on a piston head (3) and a cylinder (2) in which the piston head (3) reciprocates. The polarities of magnetic poles of the electromagnet (5) are changed over so timely that the piston head (3) is reciprocated by attractive and repulsive forces acting alternately between the permanent magnet (4) and the electromagnet (5). The reciprocating movement of the piston head (3) is converted into rotational movement by a crankshaft mechanism (11, 12) connected to Ethe piston head (3).

## Description

### BACKGROUND OF THE INVENTION

### 1. Field of the Invention

This invention relates to a novel magnet engine wherein a piston is continuously moved back and forth linearly by an attractive force and a repulsive force acting alternately between two magnetic poles and the back and forth linear movement of the piston is converted into rotational movement by means of a crankshaft to drive a driven apparatus.

### 2. Description of the Related Art

Various power engines are conventionally known including internal combustion engines such as gasoline engines and Diesel engines and external combustion engines such as Stirling engines which are an object for development at present.

The conventional power engines, however, are not only disadvantageous in dissipation of limited fossil fuel but also have a serious problem of the environmental destruction caused by exhaust gas, exhaust heat, noise and so forth involved in combustion of fossil fuel.

### SUMMARY OF THE INVENTION

It is an object of the present invention to provide a magnet engine of a simple construction which provides clean power making use of an attractive force and a repulsive force acting alternately between two magnetic poles without dissipating limited fossil fuel.

In order to attain the object, according to the present invention, there is provided a magnet engine, which comprises a cylinder, a piston head mounted for sliding back and forth movement between first and second positions in the cylinder, a first magnet disposed on the piston head, a second magnet disposed at an end portion of the cylinder in an opposing relationship to the first magnet and formed from an electromagnet having a pair of magnetic poles one of which is opposed to a particular one of a pair of magnetic poles of the first magnet, controlling means for changing over the polarities of the magnetic poles of the second magnet in response to sliding movement of the piston head in the cylinder so that the first magnet and hence the piston head are biased to move from the first position in which the first magnet is positioned nearest to the second magnet toward the second position substantially while the piston head moves from the first position toward the second position, but the first magnet and the piston head are biased from the second to the first position substantially while the piston head moves from the second toward the first position, and a crankshaft mechanism connected to the piston head for converting the back and forth movement of the piston head into rotational movement to directly or indirectly drive a driven apparatus connected thereto.

In the magnet engine, the piston head is moved back and forth linearly by an attractive force and a repulsive force which act alternately between the first and second magnets mounted on the piston head and the cylinder, respectively. The back and forth linear movement of the piston head is converted into rotational movement by means of the crankshaft mechanism and drives the driven apparatus connected to the crankshaft mechanism.

Accordingly, with the magnet engine, a clean power source which does not produce exhaust gas, exhaust heat or noise involved in combustion of fossil fuel can be obtained without dissipation of fossil fuel. Further, the magnetic engine is advantageous in that it is simple in construction, easy to manufacture and high in durability.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

FIG. 1 is a vertical sectional front elevational view of a magnet engine to which the present invention is applied;
FIG. 2 is a vertical sectional side elevational view of the magnet engine of FIG. 1;
FIG. 3 is a partial, enlarged vertical sectional front elevational view of the magnet engine of FIG. 1;
FIG. 4 is a partial, enlarged vertical sectional side elevational view of the magnet engine of FIG. 1;
FIG. 5 is a fragmentary perspective view showing components of a rectifying circuit of the magnet engine of FIG. 1;
FIG. 6 is a schematic sectional view of the magnet engine of FIG. 1 during downward movement of a piston head;
FIG. 7 is a similar view but showing the magnet engine of FIG. 1 during upward movement of the piston head;
FIG. 8 is a schematic view showing a system including the magnet engine of FIG. 1 and an air cleaning apparatus and an air cooling apparatus;
FIG. 9 is a fragmentary perspective view of the air cleaning apparatus shown in FIG. 8; and
FIG. 10 is a vertical sectional view of the air cleaning apparatus and the air cooling apparatus shown in FIG. 8.

### DETAILED DESCRIPTION OF THE PREFERRED EMBODIMENTS

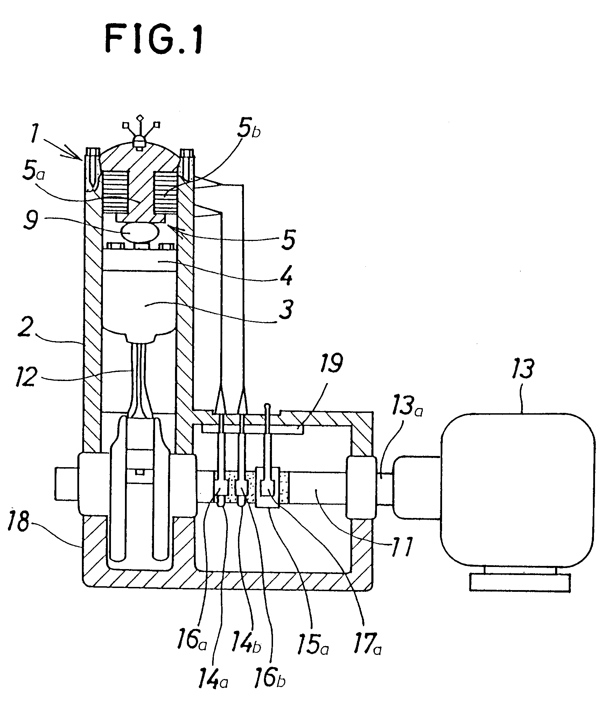

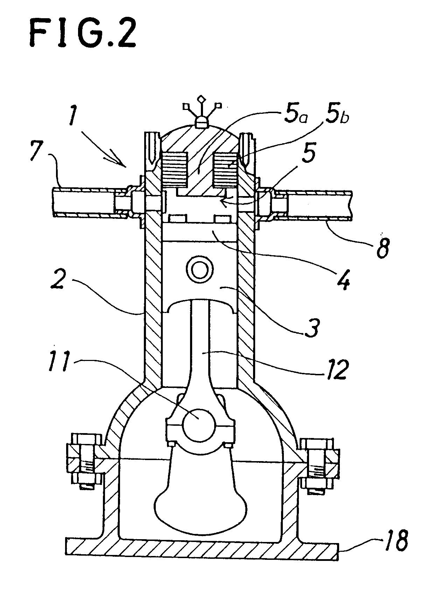

Referring first to FIGS. 1 to 4, there is shown a magnet engine to which the present invention is applied. The magnet engine is generally denoted at 1 and is used to generate electric power. The magnet engine 1 includes a cylinder 2 made of a ferromagnetic metal, a piston head 3 disposed for back and forth sliding movement in the cylinder 2, and a permanent magnet 4 in the form of a rare earth metal magnet having a strong magnetic force and mounted at the top of the piston head 3. The permanent magnet 4 has a north (N) pole and a south (S) pole disposed on the upper and lower sides thereof, respectively.

The magnet engine 1 further includes an electromagnet 5 disposed at an upper portion of the cylinder 2 in an opposing relationship to the north pole of the permanent magnet 4. The electromagnet 5 includes a coil 5b wound on an iron core 5a thereof. The iron core 5a of the electromagnet 5 serves also as a cylinder cap for closing an opening at the top of the cylinder 2.

An air chamber 6 is defined by the permanent magnet 4 and the electromagnet 5 in the cylinder 2. An intake port 2a is perforated in a side wall of the cylinder 2 defining the air chamber 6 and communicates with an air supply pipe 7. An exhaust port 2b is perforated at a location of the side wall of the cylinder 2 opposing to the intake port 2a and communicates with an exhaust pipe 8 which is open to the atmospheric air.

An intake value 9 made of a non-magnetic resilient metal is disposed so as to normally close the intake port 2a from the inner side of the cylinder 2. An exhaust valve 10 made of a non-magnetic resilient metal is disposed so as to normally close the exhaust port 2b from the outer side of the cylinder 2.

Magnetic fluid R is interposed as a lubricant between the cylinder 2 and the piston head 3. The magnetic fluid R closes the air chamber 6 above the piston head 3 fully airtight. Further, the magnetic fluid R prevents otherwise possible abrasion of the piston head 3 and the cylinder 2 by friction between them and requires no such replacement as with a conventional lubricant.

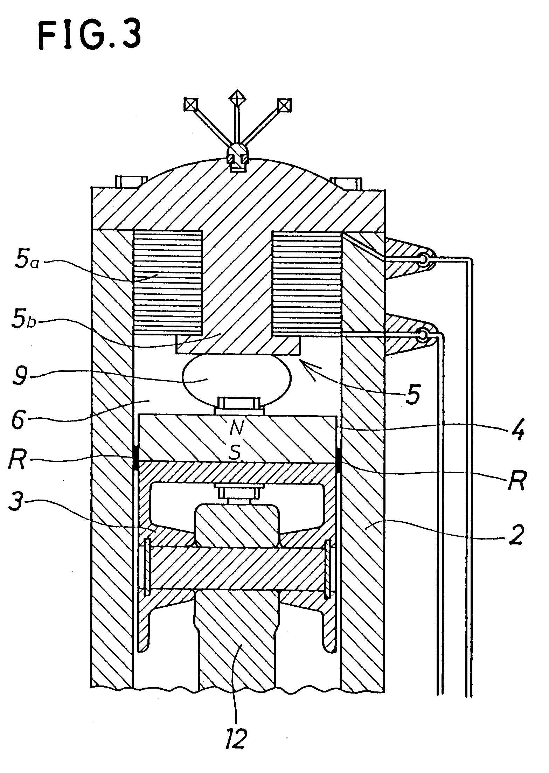

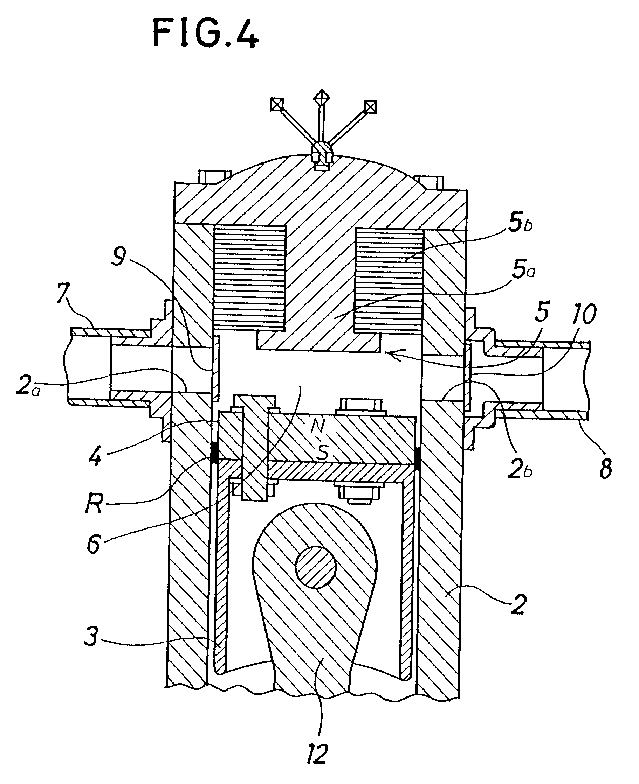

Since the permanent magnet 4 is mounted at the top of the piston head 3 with the north pole thereof positioned upwardly, the magnetic fluid R gathers at a location at which the bottom of the permanent magnet 4 on the south pole side and the piston head 3 are joined together and which is effective for lubrication and air-tightness as seen from FIGS. 3 and 4.

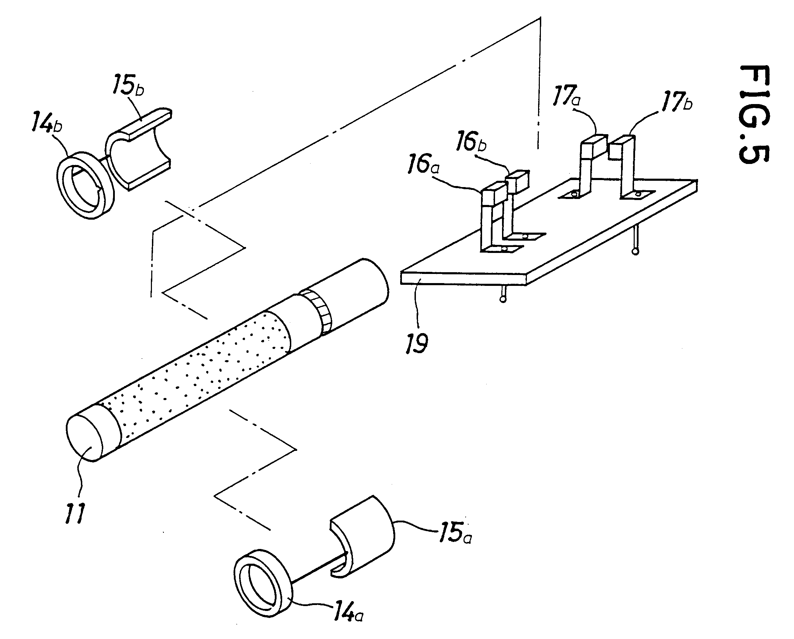

Referring also to FIG. 5, a crankshaft 11 is connected to the piston head 3 by way of a connecting rod 12, and a rotary shaft 13a of a generator 13 which serves as a driven apparatus is connected to the crankshaft 11. A pair of slip rings 14a and 14b are individually fitted in a predetermined axially spaced relationship on the crankshaft 11. A pair of commutator elements 15a and 15b are mounted in a circumferentially spaced relationship on an outer periphery of the crankshaft 11 and electrically connected to the corresponding slip rings 14a and 14b, respectively.

A pair of brushes 16a and 16b are electrically connected to the opposite ends of the coil 5b of the electromagnet 5 and slidably contact with the corresponding slip rings 14a and 14b, respectively. Another pair of brushes 17a and 17b are disposed on the opposite sides of the crank shaft 11 and slidably contact with the corresponding commutator elements 15a and 15b, respectively. The brushes 17a and 17b are connected to a dc power source not shown.

The brushes 16a, 16b, 17a and 17b are implanted on a brush supporting plate 19 mounted on a crankshaft case 18.

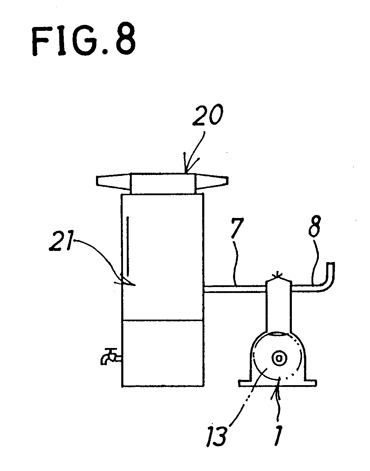

Referring now to FIG. 8, an air cleaning apparatus 20 and an air cooling apparatus 21 which has both of an air cooling function and a dehumidifying function are disposed adjacent and connected to the magnet engine 1. The air cleaning apparatus 20 is placed on and joined to the air cooling apparatus 21. The air cleaning apparatus 20 communicates with an opening not shown in a top wall of the air cooling apparatus 21 so that air cleaned by the air cleaning apparatus 20 is subsequently cooled and dehumidified by the air cooling apparatus 21. The air cooling apparatus 21 is connected to the air chamber 6 of the engine 1 by way of the air supply pipe 7 so that the Joule heat generated from the electromagnet 5 of the cylinder cap is canceled by cooled air from the air cooling apparatus 21.

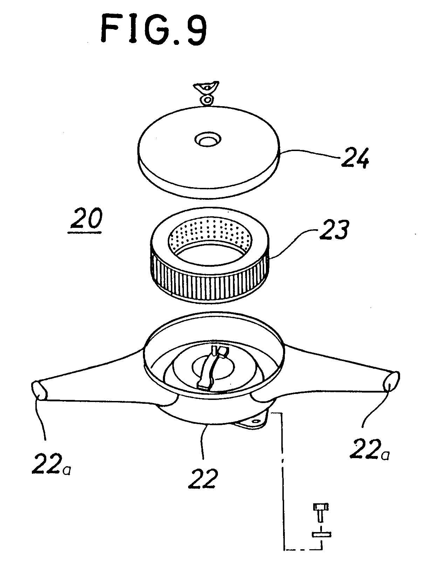

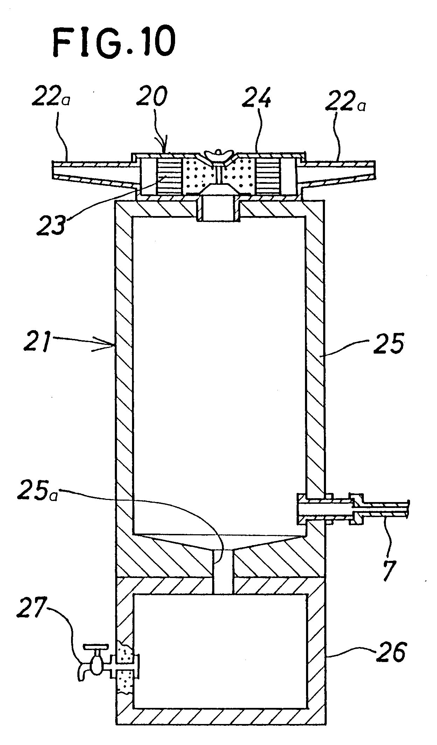

Referring now to FIGS. 9 and 10, the air cooling apparatus 20 includes a filter element 23 accommodated in a hollow body casing 22 which has a pair of air inlet ports 22a therein. The body casing 22 is closed with a lid member 24, and an air exit of the filter element 23 is communicated with the opening in the top wall of the air cooling apparatus 21.

The air cooling apparatus 21 cools and dehumidifies air by means of refrigerant which circulates through a compressor, a condenser, an expansion valve, an evaporator and so forth thereof not shown. The air cooling apparatus 21 includes a box-like member 25 placed on a drain water storing vessel 26 and having a drain hole 25a perforated in a bottom wall thereof. A drain tap 27 is attached to a bottom wall or a side face of a bottom portion of the drain water storing vessel 26.

When the magnet engine 1 is inoperative, the piston head 3 is normally positioned so as to position the permanent magnet 4 thereon nearest to the electromagnet 5. In this condition, an electric current is supplied to flow in one direction through the coil 5b of the electromagnet 5. Thereupon, the north pole is generated at a lower portion of the electromagnet 5 adjacent or opposing to the permanent magnet 4. Consequently, a repulsive force acts between the north pole at the lower portion of the electromagnet 5 and the north pole on the upper portion of the permanent magnet 4.

Thus, when a dc electric current is supplied to flow in the one direction through the coil 5b of the electromagnet 5 while the permanent magnet 4 and the electromagnet 5 are positioned nearest to each other, a repulsive force acts between the permanent magnet 4 and the electromagnet 5 and moves down the piston head 3.

When the piston head 3 is moved down, the crankshaft 11 is rotated by the piston head 3. Then, when the piston head 3 comes to a first predetermined position, the brush 17a, which has been in contact with the commutator element 15a, is put into contact now with the other commutator element 15b while the other brush 17b, which has been in contact with the commutator element 15b, is put into contact now with the other commutator element 15a, and consequently, the direction of the current flowing through the coil 5b of the electromagnet 5 is reversed. Consequently, the magnetic pole of the electromagnet 5 opposing to the north pole of the permanent magnet 4 is changed over from the north pole to the south pole, and accordingly, an attractive force now acts between the electromagnet 5 and the permanent magnet 4.

However, since the piston head 3 is on the way of its downward movement, it is moved downwardly by its own inertia until it comes to its lowermost position, at which it changes over its direction of movement.

After the piston head 3 begins its upward movement, the permanent magnet 4 thereon is attracted to and slidably moved toward the electromagnet 5 by an attractive force which acts between them. Also during the upward sliding movement of the piston head 3, the crankshaft 11 is rotated by the piston head 3 by way of the connecting rod 12. Then, when the piston head 3 comes to a second predetermined position, the brush 17a, which has been in contact with the commutator element 15b, is put into contact now with the other commutator element 15a and the other brush 17b, which has been in contact with the commutator element 15a, is put into contact now with the commutator element 15b. Consequently, the direction of the current flowing through the coil 5b of the electromagnet 5 is changed over back to its original flowing direction so that the magnetic pole of the electromagnet 5 opposing to the north pole of the permanent magnet 4 is changed over from the north pole to the south pole. Consequently, a repulsive force now acts between the electromagnet 5 and the permanent magnet 4.

However, since the piston head 3 is on the way of its upward movement, it is moved upwardly by its own inertia until it finally reaches its uppermost position, at which it reverses its direction of movement so that it thereafter moves downwardly.

Then, when the piston head 3 comes to the first predetermined position, the flowing direction of the electric current is reversed so that an attractive force thereafter acts between the electromagnet 4 and the permanent magnet 4. Thus, the piston head 3 will thereafter be reciprocated upwardly and downwardly by an attracting force and a repulsive force acting alternately between the permanent magnet 4 and the electromagnet 5 in a similar manner as described above.

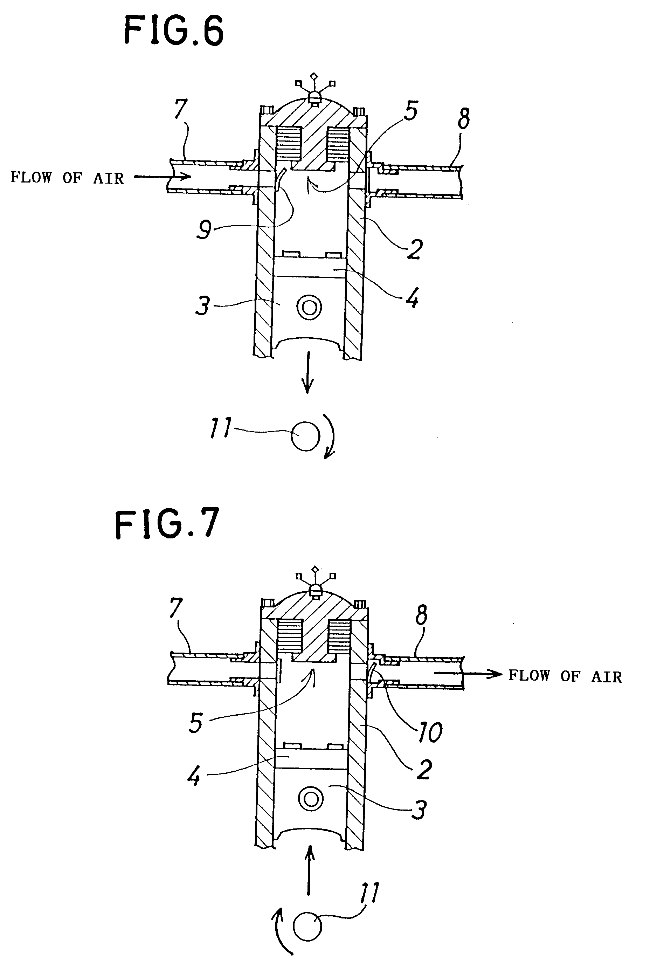

Since the crankshaft 11 is rotated by way of the connecting rod 12 as seen in FIGS. 6 and 7 when the piston head 3 is moved back and forth, also the rotary shaft 13a of the generator 13 is rotated so that required electric power is outputted from the generator 13.

When the piston head 3 is moved back and forth as described above, the internal pressure of the air chamber 6 is alternately put into a negative pressure condition and a positive pressure condition. When the internal pressure of the air chamber 6 is put into a negative pressure condition, the intake valve 9, which has been in a closed condition, is opened to admit air into the air chamber 6 from the air supply pipe 7 while the exhaust valve 10 remains in a closed condition. On the other hand, when the internal pressure of the air chamber 6 is thereafter put into a positive pressure condition, the intake valve 9 is closed by its own resiliency while the exhaust valve 10, which has been in a closed condition, is opened to allow air to be exhausted from the air chamber 6 into the exhaust pipe 8.

In this instance, air is sucked into the filter element 23 by way of the air inlet port 22a, and consequently, clean air, from which dust and some other foreign articles have been removed, is supplied into the air cooling apparatus 21. Then, the air, which has been cooled and dehumidified by the air cooling apparatus 21, is introduced into the air chamber 6 by way of the air supply pipe 7.

Consequently, no foreign articles such as dust is admitted into the air chamber 6 or between the cylinder 2 and the piston head 3. Further, since the air chamber 6 is filled fully with cooled air from the air cooling apparatus 21 and the cooled air cools or cancels the Joule heat generated from the electromagnet 5, there is no necessity of providing a cooling apparatus for exclusive use for the electromagnet 5.

It is to be noted that air is cooled by the air cooling apparatus 21 so that the temperature thereof may not become lower than 0 °C, and consequently, water is condensed to dew drops on the inner wall of the box-like member 25. The water will drop through the drain hole 25a of the body body 25 into and stored in the drain water storing vessel 26. As a result, air is dehumidified.

Since dust and some other foreign particles in the air are removed and the air is cooled using both of the air cleaning apparatus 20 and the air cooling apparatus 21, water can be extracted from within the air, and consequently, the magnet engine is very effective when it is used as a power source of a small size for a submarine or an artificial heavenly body.

While the magnet engine 1 is constructed such that the electromagnet 5 is provided at the upper end portion of the cylinder 2 and the permanent magnet 4 is provided at the top of the piston head 3 in an opposing relationship to the electromagnet 5, similar effects are achieved otherwise if a pair of electromagnets are disposed in an opposing relationship to each other on the cylinder cap and the upper portion of the piston head 3 and the magnetic poles of the electromagnet on the piston head 3 are fixed such that the north pole thereof is always opposed to the electromagnet 5 on the cylinder cap.

Further, while the magnetic fluid R is employed as the lubricant between the permanent magnet 4 mounted on the piston head 3 and the cylinder 2, when the air-tightness of the air chamber 6 does not matter very much, an ordinary lubricant may be used to assure good lubrication between them. In this instance, the limitation that the north pole of the permanent magnet 4 on the piston head 3 is disposed on the upper side is eliminated, and the permanent magnet and the electromagnet may be opposed to each other or a pair of electromagnets may be opposed to each other.

While, in the embodiment described above, the magnet engine is of the single cylinder type wherein it includes the single cylinder 2 communicated with the air cooling apparatus 20 by way of the air supply pipe 7, it may otherwise be of the multi-cylinder type so that the rotational torque of the crankshaft 1 may be increased to obtain stabilized rotation.

Having now fully described the invention, it will be apparent to one of ordinary skill in the art that many changes and modifications can be made thereto without departing from the spirit and scope of the invention as set forth herein.

## Claims

1. A magnet engine, characterized in that it comprises a cylinder (2), a piston head (3) mounted for sliding back and forth movement between first and second positions in said cylinder (2), a first magnet (4) disposed on said piston head (2), a second magnet (5) disposed at an end portion of said cylinder (2) in an opposing relationship to said first magnet (4) and formed from an electromagnet having a pair of magnetic poles one of which is opposed to a particular one of a pair of magnetic poles of said first magnet (4), controlling means (14a, 14b, 15a, 15b, 16c, 16b, 17a, 17b) for changing over the polarities of the magnetic poles of said second magnet (5) in response to sliding movement of said piston head (3) in said cylinder (2) so that said first magnet (4) and hence said piston head (3) are biased to move from the first position in which said first magnet (4) is positioned nearest to said second magnet (5) toward the second position substantially while said piston head (3) moves from the first position toward the second position, but said first magnet (4) and said piston head (3) are biased from the second to the first position substantially while said piston head (3) moves from the second toward the first position; and
a crankshaft mechanism (11, 12) connected to said piston head (3) for converting the back and forth movement of said piston head (3) into rotational movement to directly or indirectly drive a driven apparatus (13) connected thereto.

2. A magnet engine as claimed in claim 1, wherein said second magnet (5) serves also as a cylinder cap for closing the end of said cylinder (2).

3. A magnet engine as claimed in claim 1, wherein said controlling means (14a, 14b, 15a, 15b, 16c, 16b, 17a, 17b) changes over the polarities of the magnetic poles of said electromagnet (5) immediately before said piston head (3) reaches each of the first and second positions.

4. A magnet engine as claimed in claim 1, wherein said controlling means (14a, 14b, 15a, 15b, 16c, 16b, 17a, 17b) includes a commutator and brush apparatus (14a, 14b, 15a, 15b, 16c, 16b, 17a, 17b) provided on said crankshaft mechanism (11, 12) and electrically connected to said electromagnet (5).
